(19) Europäisches Patentamt

European Patent Office

Office européen des brevets

(11) **EP 0 778 298 B1**

(12) **EUROPÄISCHE PATENTSCHRIFT**

(45) Veröffentlichungstag und Bekanntmachung des Hinweises auf die Patenterteilung:
**18.04.2001  Patentblatt 2001/16**

(51) Int Cl.[7]: **C08F 279/02**, C08L 51/04, C08G 18/63

(21) Anmeldenummer: **96118831.5**

(22) Anmeldetag: **25.11.1996**

(54) **Festkörperreiche Bindemittelkombination**

Binder combination with a high solid content

Combinaison liante à haute teneur en solides

(84) Benannte Vertragsstaaten:
**AT BE CH DE DK ES FR GB IT LI NL**

(30) Priorität: **07.12.1995  DE 19545634**

(43) Veröffentlichungstag der Anmeldung:
**11.06.1997  Patentblatt 1997/24**

(73) Patentinhaber: **BAYER AG**
**51368 Leverkusen (DE)**

(72) Erfinder:
• **Wamprecht, Christian, Dr.**
**41472 Neuss (DE)**
• **Sonntag, Michael, Dr.**
**51519 Odenthal (DE)**
• **Schwindt, Jürgen, Dr.**
**51373 Leverkusen (DE)**
• **Margotte, Dieter, Dr.**
**47807 Krefeld (DE)**

(56) Entgegenhaltungen:
| EP-A- 0 068 132 | EP-A- 0 244 996 |
| EP-A- 0 275 011 | GB-A- 2 064 566 |
| US-A- 4 276 210 | US-A- 4 743 643 |
| US-A- 4 837 273 | US-A- 4 855 369 |
| US-A- 5 455 306 | |

## Beschreibung

Die Erfindung betrifft neue, OH-funktionelle Bindemittelkomponenten auf Polyacrylatbasis, ein Verfahren zu ihrer Herstellung und deren Verwendung zur Herstellung von Überzügen.

Durch Kombination der erfindungswesentlichen, OH-funktionellen Bindemittelkomponenten mit Polyisocyanaten werden neue, festkörperreiche Bindemittelkombinationen erhalten, die zu hochwertigen Beschichtungen ausgehärtet werden können. Neben hervorragender Filmoptik sowie hoher Lösemittel- und Chemikalienbeständigkeit weisen diese Überzüge bei Raumtemperatur eine sehr schnelle physikalische Trocknung und chemische Vernetzung sowie eine gute Oberflächenhärte auf.

Der Vorteil von festkörperreichen Polyacrylatharzen ist in der Verringerung der Emission organischer Verbindungen, vorzugsweise Lösemittel, bei Applikation des Lackes zu sehen. Um diese festkörperreichen Lackformulierungen zu erhalten, müssen entsprechende Polyacrylatharze mit niedrigen Viskositäten, d. h. geringen Molmassen, eingesetzt werden.

Es ist bekannt, daß zur Herstellung niedrigviskoser Polymerisate die radikalische Lösungsmittelpolymerisation eingesetzt werden kann (z. B. EP-A 408 858, EP-A 398 387, US-A 4 145 513). Zum Teil nachteilig ist dabei, daß die Eigenschaften der Polymerisate durch den Einsatz beträchtlicher Mengen Polymerisationsregler sowie deren Folgeprodukte beeinträchtigt werden. Insbesondere können die als Polymerisationsregler eingesetzten Thiole übel riechen oder sogar giftig sein. In der EP-A 225 808 bzw. EP-A 225 809 werden daher $\alpha$-Olefine, wie z. B. 1-Octen oder 1-Decen, die keinen unangenehmen Geruch besitzen, als Regler verwendet. 2K-PUR-Lacke auf Basis der Polyacrylatharze gemäß EP-A 225 809 und aliphatischer Lackpolyisocyanate haben jedoch eine zu langsame physikalische Trocknung für die Anwendung in der Autoreparatur- und Großfahrzeuglackierung.

In der US-A-4,837,273 werden Bindemittelkombinationen auf Basis von A) OH-funktionellen Pfropfcopolymerisatharzen und B) polyfunktionellen Vernetzerharzen beschrieben. Die mit diesen Bindemittelkombinationen hergestellten Lacke zeigen ebenfalls zu lange Trocknungszeiten.

Die EP-A 635 523 und die EP-A 638 591 beschreiben festkörperreiche Polyacrylatharze, die durch in Masse (Substanz)polymerisation hergestellt und danach mit einem geeigneten Lösemittel verdünnt werden. Aus der EP-A 635 523 ist bekannt, den aus der Lösemittelpolymerisation bekannten Effekt der Herstellung von unimodal eng verteilten, festkörperreichen Polyacrylatharzen bei Verwendung von tert.-Amylgruppen aufweisenden Peroxiden auf die in Massepolymerisation hergestellten Polyacrylate zu übertragen. Es konnte nachgewiesen werden, daß tert.-Amylgruppen tragende Peroxide zu niedrigviskoseren Polyacrylatharzen führen als tert.-Butylgruppen aufweisende Peroxide. Die Vorteile der Massepolymerisation gegenüber der Lösemittelpolymerisation sind jedoch nicht eindeutig zu erkennen. Die hergestellten Polyacrylatharze weisen bei einem Festgehalt von 70 Gew.-% Viskositäten bei 23 °C zwischen 2.790 und 9.130 mPa.s auf, liegen damit im medium-solids-Bereich und genügen daher heutigen Anforderungen an festkörperreiche Lacke nicht.

Die EP-A 638 591 beschreibt festkörperreiche Copolymerisate, die durch Verwendung von (Meth)Acrylatmonomeren mit sterisch anspruchsvollen (Cyclo) Alkylresten eine relativ niedrige Viskosität bei hohem Festgehalt besitzen. Bei der Herstellung dieser Copolymerisate durch Substanzpolymerisation wird in allen aufgeführten Beispielen ein Monoepoxid (Cardura E 10®) als Reaktionsmedium vorgelegt. Dieses Monoepoxid reagiert während der Polymerisation mit der zudosierten (Meth)Acrylsäure ab und wird somit in das Polyacrylat eingebaut. Durch diese Reaktion entstehen überwiegend sekundär gebundene Hydroxylgruppen, die neben den durch hydroxyfunktionelle Monomere eingeführten primären Hydroxylgruppen (Hydroxyethylmethacrylat) oder sekundären Hydroxylgruppen (Hydroxypropylmethacrylat) für die Reaktion mit dem als Vernetzer eingesetzten Polyisocyanat zur Verfügung stehen.

Sekundäre Hydroxylgruppen haben gegenüber Polyisocyanaten eine deutlich geringere Reaktivität als primäre Hydroxylgruppen. Daher erreichen 2K-PUR-Lacke auf Basis von Polyacrylatharzen mit überwiegend sekundär gebundenen Hydroxylgruppen erst nach etlichen Tagen eine ausreichende Vernetzungsdichte und damit verbunden eine zufriedenstellende Lösemittelbeständigkeit. Bei der Autoreparatur- und Großfahrzeuglackierung ist jedoch neben einer schnellen physikalischen Trocknung auch eine rasche chemische Vernetzung notwendig, um einen schnellen Einsatz des Fahrzeuges wieder zu ermöglichen.

Es stellte sich daher die Aufgabe, neue hydroxyfunktionelle Copolymerisate nach dem einfachen Lösemittelpolymerisationsverfahren bereitzustellen, welche in Kombination mit (cyclo)aliphatischen Lackpolyisocyanaten hochfestkörperreiche Lacke liefern, die neben einer schnellen physikalischen Trocknung auch eine rasche chemische Vernetzung zeigen. Im Gegensatz zu Beschichtungen mit bekannten Lacken sollten mit den neuen High-Solids-Lacken hochwertige Beschichtungen zu erzielen sein, die nach einer Härtungszeit von nur wenigen Tagen eine ausgezeichnete Lösemittelfestigkeit aufweisen und damit die rasche Gebrauchsfähigkeit des Fahrzeuges ermöglichen.

Es wurde nun gefunden, daß Lacke auf Basis von Bindemittelkombinationen aus speziellen festkörperreichen Pfropfcopolymerisaten und Polyisocyanaten einen sehr hohen Festkörpergehalt im verarbeitungsfertigen Zustand besitzen. Diese Lacke liefern Beschichtungen, die bei Raumtemperatur (23°C) eine sehr schnelle physikalische Trocknung und eine rasche chemische Vernetzung, d. h. eine ausgezeichnete Lösemittelfestigkeit nach nur 1 bis 2 Tagen besitzen. Das sehr gute Gesamteigenschaftsprofil der erhaltenen Lackfilme wie Härte, Elastizität, Chemikalien- und Wetterbeständigkeit gestattet den Einsatz in der Fahrzeuglackierung, vorzugsweise in der Autoreparatur- und Großfahrzeuglackierung. Weitere Anwendungsgebiete liegen im Bereich Korrosionsschutz bzw. Holz- und Möbellak-kierung.

Gegenstand der Erfindung sind Bindemittelkombinationen aus

A) 95 bis 40 Gew.-Teilen, vorzugsweise 90 bis 50 Gew.-Teilen OH-funktioneller Pfropfcopolymerisatharze, hergestellt durch Copolymerisation von

a) 0,1 bis 10 Gew.-Teilen mindestens eines gegebenenfalls funktionellen Polybutadiens mit einem Molekular-gewicht von $\overline{M}n$ 500 bis 10.000 und mit mindestens 20 % 1,2-Vinylstruktur,

b) 5 bis 30 Gew.-Teilen mindestens eines aliphatischen $\alpha$-Olefins mit 8 bis 16 Kohlenstoffatomen,

c)10 bis 70 Gew.-Teilen mindestens eines ungesättigten, aromatischen Monomeren wie Styrol, $\alpha$-Methylstyrol oder Vinyltoluol,

d)5 bis 60 Gew.-Teilen mindestens eines Hydroxyalkylesters der (Meth)acrylsäure mit 2 bis 4 C-Atomen im Hydroxyalkylrest und primär gebundener Hydroxylgruppe,

e)0 bis 50 Gew.-Teilen mindestens eines (cyclo)aliphatischen Esters der Acryl-und/oder Methacrylsäure mit 1 bis 12 C-Atomen in der Alkoholkomponente,

f) 0,1 bis 10 Gew.-Teilen mindestens einer $\alpha$, $\beta$-monoolefinisch ungesättigten Mono- oder Dicarbonsäure mit 3 bis 7 C-Atomen und/oder mindestens eines Maleinsäure- bzw. Fumarsäurehalbesters mit 1 bis 14 C-Atomen im Alkoholrest,

g) 0 bis 30 Gew.-Teilen weiteren copolymerisierbaren, olefinisch ungesättigten Verbindungen und

B) 5 bis 60 Gew.-Teilen, vorzugsweise 10 bis 50 Gew.-Teilen eines mehrfach funktionellen Vernetzerharzes, beispielsweise Aminoplastharze, wie alkoxylierte Melaminharze, Melamin-Formaldehyd-Kondensationsprodukte, Harnstoffharze, Guanidinharze, Phenolplastharze, Resolharze und bevorzugt, gegebenenfalls blockierte, polyfunktionelle Isocyanate, vorzugsweise oligomere Isocyanate mit Biuret-, Allophanat-, Uretdion-, Urethan- und/oder Isocyanuratstruktur,

wobei jeweils die Summe der Gew.-Teile der Komponenten A) und B) sowie die Summe der Gew.-Teile der Komponenten a) bis g) 100 beträgt.

Gegenstand der Erfindung ist auch die Verwendung der erfindungsgemäßen Bindemittelkombinationen in der Fahrzeuglackierung, insbesondere der Autoreparatur-und Großfahrzeuglackierung, in der Holz- und Möbellackierung sowie im Bereich Korrosionsschutz.

Die erfindungswesentlichen Pfropfcopolymerisate A) der erfindungsgemäßen Bindemittelkombinationen unterscheiden sich in ihrer chemischen Zusammensetzung ganz wesentlich sowohl von den Polyacrylatpolyolen der EP-A 225 809 als auch den Substanzcopolymerisaten der EP-A 635 523 und der EP-A 638 591. Bezüglich der lacktechnischen Eigenschaften, insbesondere der Trocknungsgeschwindigkeit und der Lösemittelbeständigkeit, ergeben sich Vorteile gegenüber den Produkten der genannten Dokumente, wie in entsprechenden Vergleichsbeispielen nachgewiesen wird.

Die Herstellung der erfindungswesentlichen Pfropfcopolymerisatharze A) kann durch Copolymerisation der Bestandteile a) bis g) nach üblichen Verfahren erfolgen. Die radikalische Polymerisation in Lösung ist bevorzugt. Dabei werden bei Temperaturen von 140 bis 240°C in Gegenwart von Radikalbildnern monomere und oligomere Bausteine copolymerisiert.

Bevorzugte Ausgangsverbindungen für die Polyacrylatharze A) bestehen aus:

a) 0,3 bis 7,5 Gew.-Teilen eines oder mehrerer, gegebenenfalls funktioneller, Polybutadiene mit einem Molekular-gewicht $\overline{M}n$ von 500 bis 5.000 und mindestens 30 % 1,2-Vinylstruktur,

b) 5 bis 25 Gew.-Teilen mindestens eines $\alpha$-Olefins mit 8 bis 12 Kohlenstoffatomen,

c) 15 bis 65 Gew.-Teilen Styrol,

d) 7,5 bis 55 Gew.-Teilen Hydroxyethylacrylat, Hydroxyethylmethacrylat, Butandiol-1,4-monoacrylat oder deren Mischungen,

e) 0 bis 45 Gew.-Teilen mindestens eines (cyclo)aliphatischen Esters der Acryl- und/oder Methacrylsäure mit 1 bis 10 C-Atomen in der Alkoholkomponente,

f) 0,3 bis 8 Gew.-Teilen Acrylsäure, Methacrylsäure, Maleinsäure- bzw. Fumarsäurehalbester mit 1 bis 8 C-Atomen in der Alkoholkomponente oder deren Mischungen und

g) 1 bis 25 Gew.-Teilen Acrylnitril, Methacrylnitril, Hydroxypropyl(meth)-acrylat (bis 10 Gew.-Teile), Vinylester aliphatischer, gegebenenfalls verzweigter Moncarbonsäuren mit 1 bis 10 Kohlenstoffatomen im Säurerest, Di(cyclo) alkylester der Malein- und/oder Fumarsäure mit 1 bis 8 Kohlenstoffatomen im Alkoholrest oder deren Mischungen,

wobei die Summe der Gew.-Teile der Komponenten a) bis g) 100 beträgt.

Besonders bevorzugte Ausgangsverbindungen für die Polyacrylatharze A) bestehen aus:

a) 0,5 bis 5 Gew.-Teilen eines oder mehrerer, gegebenenfalls funktioneller, Polybutadiene mit einem Molekulargewicht $\bar{M}n$ von 500 bis 3.000 und mindestens 40 % 1,2-Vinylstruktur,

b) 5 bis 20 Gew.-Teilen 1-Octen, 1-Decen oder deren Mischungen,

c) 20 bis 65 Gew.-Teilen Styrol,

d) 10 bis 50 Gew.-Teilen Hydroxyethylacrylat, Hydroxyethylmethacrylat oder deren Mischungen,

e) 0 bis 35 Gew.-Teilen Ethylacrylat, Butylacrylat, 2-Ethylhexylacrylat, Isobornylacrylat, Methylmethacrylat, Ethylmethacrylat, Butylmethacrylat, 2-Ethylhexylmethacrylat, Cyclohexylmethacrylat, Isobornylmethacrylat oder deren Mischungen,

f) 0,5 bis 5 Gew.-Teilen Acrylsäure, Methacrylsäure oder deren Mischungen und

g) 3 bis 20 Gew.-Teilen,Vinylester aliphatischer, gegebenenfalls verzweigter Monocarbonsäuren mit 3 bis 9 Kohlenstoffatomen im Säurerest, Di(cyclo)alkylester der Malein- und/oder Fumarsäure mit 1 bis 8 C-Atomen im Alkoholrest oder deren Mischungen,

wobei die Summe der Gew.-Teile der Komponenten a) bis g) 100 beträgt.

Als Ausgangsmaterialien a) für die erfindungswesentlichen Pfropfcopolymerisate A) sind grundsätzlich alle Polybutadiene geeignet, die mindestens 20 % seitenständige 1,2-Vinyldoppelbindungen besitzen.

Es eignen sich bevorzugt Polybutadiene mit einem Gehalt an vinylischen Doppelbindungen von ≥ 30 %. Dabei kann der Rest an Doppelbindungen aus einem beliebigen Verhältnis von 1,4-cis- und 1,4-trans-Struktur bestehen. Auch Polybutadiene, die daneben noch Doppelbindungen in cyclischen Strukturen aufweisen sind als Komponente a) geeignet. Ein besonders geeignetes Ausgangsmaterial ist ein Produkt mit ≥ 40 % 1,2-Vinyldoppelbindungen.

Im allgemeinen wird man Isomerengemische von Polybutadienen einsetzen, z. B. Polybutadiene, die 30 bis 90 % 1,2-vinylische Doppelbindungen, 10 bis 70 % Gemische von 1,4-cis und 1,4-trans-Doppelbindungen und 0 bis 30 % cyclische Anteile aufweisen. Weiterhin können die Polybutadiene gegebenenfalls funktionelle Gruppen tragen, z. B. Hydroxylgruppen, Carboxylgruppen etc.

Solche Polybutadiene mit unterschiedlicher Konfiguration sind bekannt, z. B. "Makromoleküle" von H. G. Elias, 4. Auflage, Hüthig und Wepf-Verlag, Basel, Heidelberg, New York, Seiten 676 sowie 744 bis 746 und 1012 ff.

Die Monomeren bzw. Oligomeren a) bis g) werden im allgemeinen in den gleichen Verhältnissen, wie sie zur Polymerisation eingesetzt werden, in das Pfropfcopolymerisat eingebaut. Die eingebauten Einheiten können im wesentlichen statistisch verteilt sein. Es ist möglich, daß die Komponente b) nicht vollständig in das Pfropfcopolymerisat eingebaut wird und als Restmonomer in dem gelösten Pfropfcopolymerisat vorliegt. Sie verbleibt dann entweder im Produkt als zusätzliches Lösemittel oder kann destillativ zusammen mit Lösemittel entfernt werden.

Als Lösemittel bei der Herstellung der Komponente A) eignen sich z. B. aliphatische, cycloaliphatische und/ oder aromatische Kohlenwasserstoffe, wie Alkylbenzole, z. B. Toluol, Xylol; Ester, wie Ethylacetat, n-Propylacetat, Isopropylacetat, n-Butylacetat, Acetate mit längeren Alkoholresten, Butylpropionat, Pentylpropionat, Ethylenglykolmonoethyletheracetat, das entsprechende Methyletheracetat; Ether wie Ethylenglykolacetatmonomethyl-, -ethyl- oder -butylether; Ketone wie Methylamylketon, Methylisobutylketon, Glykole, Alkohole, Lactone oder dergleichen oder Gemische derartiger Lösemittel.

Die Herstellung der Pfropfcopolymerisate A) kann kontinuierlich oder diskontinuierlich erfolgen. Üblicherweise wird in einen Polymerisationsreaktor gleichmäßig und kontinuierlich die Monomermischung und der Initiator eindosiert und gleichzeitig die entsprechende Menge Polymerisat kontinuierlich abgeführt. Vorzugsweise können so chemisch nahezu einheitliche Copolymere hergestellt werden. Chemisch nahezu einheitliche Copolymere können auch hergestellt werden, indem man die Monomermischung und den Initiator mit konstanter Geschwindigkeit in den Polymerisationsreaktor eindosiert, ohne das Polymerisat abzuführen.

Im allgemeinen erfolgt die Pfropfcopolymerisation im Temperaturbereich von 140 bis 240°C, vorzugsweise 160 bis 210°C unter einem Druck von bis zu 25 bar. Die Initiatoren werden in Mengen von 0,05 bis 15 Gew.-%, vorzugsweise 1 bis 10 Gew.-%, bezogen auf die Gesamtmenge der Komponenten a) bis g), eingesetzt.

Geeignete Initiatoren zur Herstellung der Pfropfcopolymerisate A) sind übliche Radikalstarter auf Azo- oder Peroxidbasis, jedoch nur solche, die in dem oben genannten Temperaturbereich eine für die Polymerisation genügend lange Halbwertszeit von ca. 5 Sekunden bis ca. 120 Minuten besitzen. Geeignet sind beispielsweise 2,2'-Azobis-(2-methylpropannitril), 2,2'-Azobis-(2-methylbutannitril), 1,1'-Azobis(cyclohexancarbonitril), tert.-Butylperoxy-2-ethylhexanoat, tert.-Butylperoxydiethylacetat, tert.-Butylperoxyisobutyrat, 1,1-Di-tert.-butylperoxy-3,3,5-trimethylcyclohexan, 1,1-Di-tert.-butylperoxycyclohexan, tert.-Butylperoxy-3,5,5-trimethylhexanoat, tert.-Butylperoxyisopropylcarbonat, tert.-Butylperoxyacetat, tert.-Butylperoxybenzoat, Dicumylperoxid, tert.-Butylcumylperoxid, Di-tert.-butylperoxid und Di-tert.-amylperoxid.

Die erfindungswesentlichen Pfropfcopolymerisate A) stellen wertvolle Bindemittelkomponenten für festkörperreiche Zweikomponenten-Lacke dar. Unter "Zweikomponenten-Lacken" sind in diesem Zusammenhang sowohl "Eintopf-Systeme" als auch "Zweitopf-Systeme" zu verstehen. Da es sich bei den erfindungsgemäßen Polymerisatharzen um Bindemittelkomponenten für Zweikomponenten-Lacke handelt, enthalten die Lacke neben den erfindungsgemäßen Polymerisatharzen (und gegebenenfalls weiteren Polyhydroxylverbindungen und/oder aminischen Reaktivverdünnern) eine Härterkomponente. Falls es sich bei diesem Härter beispielsweise um ein Polyisocyanat mit freien Isocyanatgruppen handelt, können die gebrauchsfertigen Beschichtungsmittel erst kurz vor ihrer Verarbeitung durch Abmischen der Komponenten hergestellt werden. In einem solchen Fall würde es sich um ein "Zweitopf-System" handeln. Falls es sich jedoch bei dem Härter um eine Verbindung handelt, die mit den erfindungsgemäßen Polymerisatharzen erst bei erhöhter Temperatur reagiert, beispielsweise um Polyisocyanate mit blockierten Isocyanatgruppen, kann der Härter auch bereits bei Raumtemperatur mit dem Polymerisatharz zu einem bei Raumtemperatur lagerfähigen "Eintopf-System" vereinigt werden.

Bei der erfindungsgemäßen Verwendung der erfindungswesentlichen Pfropfcopolymerisate werden diese gegebenenfalls in Abmischung mit anderen, aus der Polyurethanlacktechnologie bekannten, organischen Polyhydroxylverbindungen als Polyhydroxyl-Komponente und/oder in Abmischung mit aminischen Reaktivverdünnern eingesetzt. Bei diesen anderen Polyhydroxylverbindungen kann es sich um die üblichen Polyester-, Polyether-, Polycarbonat-, Polyurethan- oder Polyacrylatpolyole handeln. Vorzugsweise werden als weitere organische Polyhydroxylverbindungen, falls solche überhaupt neben den erfindungswesentlichen Pfropfcopolymerisaten zum Einsatz gelangen, die an sich bekannten Polyacrylatpolyole und/oder Polyesterpolyole eingesetzt. Bei den aminischen Reaktivverdünnern kann es sich um Produkte mit blockierten Aminogruppen, wie z. B. Aldimine oder Ketimine, oder um solche, die noch freie, jedoch in ihrer Reaktivität abgeschwächte Aminogruppen aufweisen, wie z. B. Asparaginsäureester, handeln. In aller Regel weisen die aminischen Reaktivverdünner mehr als eine (blockierte) Aminogruppe auf, sodaß sie bei der Vernetzungsreaktion zum Aufbau des polymeren Lackfilmnetzwerkes mitwirken.

Bei der erfindungsgemäßen Verwendung der erfindungswesentlichen Pfropfcopolymerisate können diese in Abmischung mit bis zu 70, vorzugsweise bis zu 50 Gew-% an anderen Polyolen und/oder aminischen Reaktivverdünnern der beispielhaft genannten Art zum Einsatz gelangen. Besonders bevorzugt werden jedoch die erfindungswesentlichen Pfropfcopolymerisate als alleinige Polyol-Komponente bei der erfindungsgemäßen Verwendung eingesetzt.

Der Hydroxylgruppengehalt der Pfropfcopolymerisate A) liegt bei 0,53 bis 8,76 Gew-%, vorzugsweise bei 0,88 bis 8,03 Gew-% und besonders bevorzugt bei 1,31 bis 7,3 Gew-%.

Als Reaktionskomponente B) für die erfindungswesentlichen hydroxylhaltigen Pfropfcopolymerisatharze A) zur Herstellung der erfindungsgemäßen Bindemittelkombinationen für Überzüge und Beschichtungen kommen Vernetzungsreagentien in Betracht, die durch chemische Reaktionen mit den Hydroxylgruppen der Pfropfcopolymerisatharze zu einer Aushärtung der erfindungsgemäßen Überzüge führen, wie Aminoplastharze, z. B. entsprechende Melamin-Derivate, wie alkoxylierte Melaminharze oder Melamin-Formaldehyd-Kondensationsprodukte (z.B. FR-A 943 411, "The Chemistry of Organic Filmformers", Seiten 235 - 240, John Wiley & Sons, Inc., New York, 1974) und übliche Vernetzungsmittel, z. B. mit alkoholischen Hydroxylgruppen reaktionsfähige Epoxide, Carbonsäureanhydride, Phenolplastharze, Resolharze, Harnstoffharze oder Guanidinharze bzw. deren Gemische.

Bevorzugte Reaktionskomponenten B) für die erfindungswesentlichen Pfropfcopolymerisate A) zur Herstellung der erfindungsgemäßen Bindemittelkombinationen für Überzüge und Beschichtungen sind marktübliche, gegebenenfalls blockierte, Lackpolyisocyanate, das heißt vor allem die bekannten Urethangruppen, Uretdiongruppen, Allophanatgruppen und insbesondere Biuretgruppen bzw. Isocyanuratgruppen aufweisenden Modifizierungsprodukte von einfachen Diisocyanaten, wie z. B. 1,6-Diisocyanatohexan, 1-Isocyanato-3,3,5-trimethyl-5-isocyanatomethylcyclohexan (Isophorondiisocyanat), 1-Methyl-2,4-diisocyanatocyclohexan und seine Gemische mit bis zu 35 Gew.-%, bezogen auf Gesamtgemisch, an 1-Methyl-2,6-diisocyanatocyclohexan; 2,4-Diisocyanatotoluol und seine Gemische mit bis zu 35 Gew.-%, bezogen auf Gesamtgemisch, an 2,6-Diisocyanatotoluol oder deren Gemische. Besonders bevorzugt werden die entsprechenden "Lackpolyisocyanate" mit aliphatisch und/oder cycloaliphatisch gebundenen, freien Isocyanatgruppen eingesetzt. Geeignete Blockierungsmittel für gegebenenfalls zum Einsatz kommende blockierte Polyisocyanate sind z. B. ε-Caprolactam, Butanonoxim, Phenol bzw. Phenolderivate, sekundäre Amine, gegebenenfalls als Teil eines heterocyclischen Ringsystems, Malonsäurealkylester etc..

Zu den Urethangruppen aufweisenden "Lackpolyisocyanaten" gehören z. B. die Umsetzungsprodukte von 2,4- und gegebenenfalls 2,6-Diisocyanatotoluol oder 1-Methyl-2,4- und gegebenenfalls 1-Methyl-2,6-diisocyanatocyclohexan mit unterschüssigen Mengen an Trimethylolpropan, bzw. dessen Gemischen mit einfachen Diolen, wie z. B. den isomeren Propan- oder Butandiolen. Die Herstellung derartiger, Urethangruppen aufweisender Lackpolyisocyanate in praktisch monomerfreier Form ist beispielsweise in der DE-PS 1 090 196 beschrieben.

Zu den Biuretgruppen aufweisenden Lackpolyisocyanaten, die bei der erfindungsgemäßen Verwendung besonders bevorzugt sind, gehören insbesondere jene auf Basis von 1,6-Diisocyanatohexan, deren Herstellung beispielsweise in EP-A 3 505, DE-A 1 101 394, US-A 3 358 010 oder US-A 3 903 127 beschrieben ist.

Zu den ebenfalls besonders bevorzugten, Isocyanuratgruppen aufweisenden Lackpolyisocyanaten gehören insbesondere die Trimerisate bzw. Mischtrimerisate der oben beispielhaft genannten Diisocyanate, wie z. B. die Isocyanuratgruppen aufweisenden Polyisocyanate auf Basis Diisocyanatotoluol gemäß GB-A 1 060 430, GB-A 1 506 373 oder GB-A 1 485 564, die Mischtrimerisate von Diisocyanatotoluol mit 1,6-Diisocyanatohexan, die beispielsweise gemäß DE-A 1 644 809 oder DE-A 3 144 672 zugänglich sind und insbesondere die aliphatischen bzw. die aliphatisch-cycloaliphatischen Trimerisate bzw. Mischtrimerisate auf Basis von 1,6-Diisocyanatohexan und/oder Isophorondiisocyanat, die beispielsweise gemäß US-A 4 324 879, US-A 4 288 586, DE-A 3 100 262, DE-A 3 100 263, DE-A 3 033 860 oder DE-A 3 144 672 erhältlich sind. Die bei der erfindungsgemäßen Verwendung zum Einsatz gelangenden Lackpolyisocyanate weisen im allgemeinen einen Isocyanatgehalt von 5 bis 25 Gew.-%, eine mittlere NCO-Funktionalität von 2,0 bis 5,0, vorzugsweise 2,8 bis 4,0 und einen Restgehalt an, zu ihrer Herstellung eingesetzten, monomeren Diisocyanaten von unter 2 Gew.-%, vorzugsweise unter 0,5 Gew.-% auf. Selbstverständlich können auch beliebige Gemische der beispielhaft genannten Lackpolyisocyanate zum Einsatz gelangen.

In den bei der erfindungsgemäßen Verwendung zum Einsatz gelangenden, festkörperreichen Zweikomponenten-Polyurethanlacken liegen die Polyolkomponente und die Polyisocyanatkomponente in einem Äquivalentverhältnis von Isocyanatgruppen zu Hydroxylgruppen von 5 : 1 bis 1 : 2, vorzugsweise 1,5 : 1 bis 1 : 1,2 entsprechenden Menge vor. Die durch Vermischen der beiden Komponenten erhaltenen Zweikomponenten-Bindemittel haben nur eine begrenzte Verarbeitungszeit von ca. 4 bis 24 Stunden und werden entweder als solche (lösungsmittelhaltige Klarlacke), vorzugsweise jedoch unter Mitverwendung der üblichen Hilfs- und Zusatzmittel verarbeitet. Diese gegebenenfalls mitzuverwendenden Hilfs- und Zusatzmittel können entweder dem Gemisch oder den Einzelkomponenten vor deren Durchmischung hinzugefügt werden.

Als Hilfs- und Zusatzmittel kommen beispielsweise weitere Lösungsmittel in Betracht, wie z.B. Ethylacetat, n-Propylacetat, iso-Propylacetat, n Butylacetat, n-Hexylacetat, n-Heptylacetat, 2-Ethylhexylacetat, Methoxypropylacetat, Methylethylketon, Methylisobutylketon, Toluol, Xylol, höhere Aromatengemische, Testbenzin oder beliebige Gemische dieser Lösungsmittel. Weitere, gegebenenfalls mitzuverwendende Hilfs- und Zusatzmittel sind z. B. Weichmacher, wie Trikresylphosphat, Phthalsäurediester, Chlorparaffine; Pigmente und Füllstoffe, wie Titandioxid, Bariumsulfat, Kreide, Ruß; Katalysatoren, wie z. B. N,N-Dimethylbenzylamin, N-Methylmorpholin, Zinkoctoat, Zinn-II-octoat oder Dibutylzinndilaurat; Verlaufsmittel; Verdickungsmittel; gegebenenfalls Stabilisatoren, wie substituierte Phenole; organofunktionelle Silane als Haftvermittler sowie Lichtschutzmittel und UV-Absorber. Derartige Lichtschutzmittel sind beispielsweise sterisch gehinderte Amine, wie sie in DE-A 2 417 353 (= US-A 4 123 418 und US-A 4 110 304) und DE-A 2 456 864 (= US-A 3 993 655 und US-A 4 221 701) beschrieben sind. Besonders bevorzugte Verbindungen sind: Bis-(1,2,2,6,6-pentamethylpiperidyl-4)-sebacat, Bis-(2,2,6,6-tetramethylpiperidyl-4)-sebacat, n-Butyl-(3,5-di-tert.-butyl-4-hydroxybenzyl)-malonsäure-bis-(1,2,2,6,6-pentamethylpiperidyl-4)-ester.

Die den Füllstoffen und Pigmenten anhaftende Feuchtigkeit kann durch vorhergehende Trocknung oder durch Mitverwendung von wasseraufnehmenden Stoffen, wie z. B. Molekularsieb-Zeolithen, entfernt werden.

Die Trocknung, der bei der erfindungsgemäßen Verwendung resultierenden Lackfilme kann bei Verwendung von Blockierungsmittel-freien Polyisocyanaten als Vernetzer bei Raumtemperatur erfolgen und bedarf keiner Temperaturerhöhung, um die eingangs erwähnten, optimalen Eigenschaften zu erreichen. Bei Anwendung der Bindemittel als Reparaturlack ist jedoch oftmals eine Temperaturerhöhung auf ca. 60 bis 100°C, vorzugsweise 60 bis 80°C, während eines Zeitraumes von 20 bis 60 Minuten empfehlenswert, um die Trocknungs- und Härtungszeit zu verkürzen.

Bei Verwendung von blockierten Polyisocyanaten bzw. den anderen zuvor genannten Produktgruppen als Vernetzer müssen für die Trocknung bzw. Härtung der Lackfilme höhere Temperaturen von beispielsweise 100 bis 240°C, vorzugsweise 120 bis 220°C angewendet werden.

Die entstehenden Lackfilme zeichnen sich durch eine hohe Härte, eine gute Elastizität, eine ausgezeichnete Witterungs- und Chemikalienbeständigkeit sowie einen hohen Glanz aus. Die Härtungszeiten sowohl für die physikalische Antrocknung als auch die chemische Vernetzung sind sehr kurz, so daß entsprechend beschichtete Gebrauchsgegenstände sehr schnell gegenüber Lösemitteln und Chemikalien resistent sind und in Gebrauch genommen werden können.

Die erfindungsgemäßen Lacke eignen sich daher vor allem für die Lackierung von Großfahrzeugen, wie z. B. Flugzeuge, Eisenbahn- und Straßenbahnwaggons, LKW-Aufbauten usw. Ein weiteres bevorzugtes Einsatzgebiet besteht in ihrer Verwendung als Autoreparaturlack. Weiterhin geeignet sind die Lacke für Korrosionsschutzanwendungen, wie die Beschichtung von Brücken und Strommasten, für die Holz- und Möbellackierung und für die Autoerstlackierung und industrielle Anwendungen.

Die Applikation der erfindungsgemäßen Lacke erfolgt nach üblichen Methoden, beispielsweise durch Spritzen, Gießen, Tauchen, Streichen, Sprühen oder Walzen. Die erfindungsgemäßen Lacke eignen sich sowohl zur Herstellung von Grundierungen als auch zur Herstellung von Zwischenschichten und insbesondere zur Herstellung von Deckschichten auf den zu lackierenden Substraten.

Beispiele

Alle Prozentangaben beziehen sich, falls nicht anders vermerkt, auf das Gewicht.

1. Allgemeine Herstellvorschrift für die erfindungswesentlichen Pfropfcopolymerisate A1 bis A8 und die Vergleichsprodukte V1 und V2

In einem 5-1-Edelstahldruckreaktor mit Rührer, Destillationseinrichtung, Vorlagebehälter für Monomermischung und Initiator inklusive Dosierpumpen sowie automatischer Temperaturregelung wird Teil I vorgelegt und auf die gewünschte Polymerisationstemperatur (bei den Beispielen 190°C) aufgeheizt. Dann werden durch separate Zuläufe gemeinsam beginnend Teil II (Monomermischung) in 1,5 Stunden und Teil III (Initiator) in 1,75 Stunden zudosiert, wobei die Polymerisationstemperatur nahezu ($\pm$ 2°C) konstant gehalten wird. Anschließend wird 30 Minuten bei der Polymerisationstemperatur nachgerührt. Dann wird auf Raumtemperatur abgekühlt und der Festgehalt bestimmt. Die Pfropfcopolymerisate sollten einen Festgehalt von 75 $\pm$ 1 % haben, wobei ein Teil des verwendeten $\alpha$-Olefins nicht in das Polymer eingebaut wird. Bei einem Festgehalt von $\leq$ 73 % wird mit 5 % der ursprünglichen Initiatormenge bei 150°C 30 Minuten nachaktiviert. Bei einem Festgehalt zwischen 73 und 74 % wird auf 75 $\pm$ 1 % andestilliert. Danach wird das Pfropfcopolymerisat über einen Filter (Seitz Supra 5500) filtriert. Die Zusammensetzungen der Teile I bis III sowie die Kenndaten der erhaltenen Produkte sind in Tabelle I aufgeführt.

2. Nachstellung des Copolymers 2 der EP-A 638 591 als Vergleichsbeispiel V3

Gemäß der Herstellvorschrift und der Zusammensetzung wurde das Copolymerisat 2 der EP-A 638 591 exakt nachgestellt. Es wurde ein Produkt mit folgenden Kenndaten erhalten:

| | |
|---|---|
| Festgehalt | 74,2 % |
| Viskosität bei 23 °C | 8450 mPa.s |
| Säurezahl, Lff/FH | 7,5 / 10,1 mg KOH/g |
| Hydroxylzahl, Lff/FH | 109 / 147 mg KOH/g |
| Hazen-Farbzahl | 65 APHA |

| Copolymerisat | A1 | A2 | A3 | A4 | A5 | A6 | A7 | A8 | V1 | V2 |
|---|---|---|---|---|---|---|---|---|---|---|
| **Zusammensetzung** | | | | | | | | | | |
| Teil 1 | | | | | | | | | | |
| Butylacetat | 15,00 | 15,00 | 15,00 | 15,00 | 15,00 | 15,00 | 15,00 | 15,00 | 15,00 | 15,00 |
| 1-Decen | 9,40 | 9,40 | 9,40 | 9,40 | 9,40 | 9,40 | 9,40 | 9,40 | 9,40 | 9,40 |
| Vinylester ®VeoVa 9[1] | - | - | 8,39 | - | - | - | - | 4,94 | - | - |
| | | | | | | | | | | |
| Teil 2 | | | | | | | | | | |
| Styrol | 33,00 | 33,00 | 33,00 | 33,00 | 33,00 | 33,00 | 26,60 | 36,45 | 33,00 | 33,00 |
| HEMA | 23,00 | 23,00 | 23,00 | 23,00 | 23,00 | 23,00 | 23,00 | 23,00 | 23,00 | 23,00 |
| Butylacrylat | 8,39 | 7,58 | - | - | - | 4,20 | 1,49 | - | 9,20 | 9,20 |
| Butylmethacrylat | - | - | - | - | 8,39 | - | - | - | - | - |
| Isobornylacrylat | - | - | - | 8,39 | - | - | - | - | - | - |
| Methylmethacrylat | - | - | - | - | - | 4,19 | 13,30 | - | - | - |
| Dicyclohexylmaleinat | - | - | - | - | - | - | - | 0,81 | - | - |
| Polybutadien ®Lithene AL[2] | 0,81 | 1,62 | 0,81 | 0,81 | 0,81 | 0,81 | 0,81 | 1,40 | 0,81 | 1,40 |
| Acrylsäure | 1,40 | 1,40 | 1,40 | 1,40 | 1,40 | 1,40 | 1,40 | 1,40 | 1,40 | - |
| | | | | | | | | | | |
| Teil 3 | | | | | | | | | | |
| Di-tert.-butylperoxid | 5,00 | 5,00 | 5,00 | - | 5,00 | 5,00 | 5,00 | 5,00 | 5,00 | 5,00 |
| Di-tert.-amylperoxid | - | - | - | 5,00 | - | - | - | - | - | - |
| Butylacetat | 4,00 | 4,00 | 4,00 | 4,00 | 4,00 | 4,00 | 4,00 | 4,00 | 4,00 | 4,00 |
| | | | | | | | | | | |
| **Kenndaten** | | | | | | | | | | |
| Festgehalt, % | 75,2 | 75,4 | 74,4 | 75,2 | 75,0 | 75,0 | 74,1 | 75,0 | 74,6 | 74,7 |
| Viskosität, mPa.s | 5000 | 6150 | 5880 | 6180 | 4080 | 7850 | 4360 | 5880 | 4500 | 3820 |
| Säurezahl, Lff., mg KOH/g | 13,3 | 13,4 | 12,7 | 11,3 | 13,5 | 13,1 | 13,0 | 12,6 | 13,4 | 13,2 |
| OH-Zahl, Lff. mg KOH/g | 98 | 99 | 96 | 99 | 96 | 96 | 97 | 96 | 98 | 98 |
| OH-Gehalt, FH, % | 4,0 | 4,0 | 3,9 | 4,0 | 3,9 | 3,9 | 3,9 | 3,9 | 4,0 | 4,0 |
| Farbzahl, APHA | 20 | 30 | 75 | 0 | 20 | 5 | 60 | 25 | 10 | 20 |
| Aussehen | klar | klar | klar | klar | klar | klar | klar | klar | klar | klar |

Tabelle 1: Zusammensetzungen und Kenndaten der erfindungswesentlichen Pfropfcopolymerisate A1 bis A8 und der Vergleichsprodukte V1 und V2
1) Handelsprodukt von Shell. 2) Handelsprodukt von Chemetall, Frankfurt, $\bar{M}n$ = 1000 g Mikrostruktur: 40-50 % 1,2-Vinyldoppelbindungen, 15-25 % 1,4-trans-Doppelbindungen, 10-20 % 1,4-cis-Doppelbindungen, 15-20 % cyclische Anteile

3. Verwendungsbeispiel

Dieses Beispiel beschreibt die Herstellung gebrauchsfertiger Lacke auf Basis der Polyacrylatpolyole A1 bis A8 und V1 bis V3, deren Applikation und die Prüfung der resultierenden Lackfilme.

Zur Beurteilung der allgemeinen Lackeigenschaften wurden Klarlacke hergestellt. Dazu wurden die Polyole A1 bis A8 sowie V1 bis V3 mit einem Lackpolyisocyanat versetzt, wobei ein NCO/OH-Verhältnis von ca. 1 : 1 eingehalten wurde. Als Lackpolyisocyanat diente ®Desmodur N 3390, ein Isocyanuratgruppen-enthaltendes Polyisocyanat auf Basis 1,6-Diisocyanatohexan, 90%ig gelöst in Butylacetat/Solvent Naphtha 100 (1 : 1); NCO-Gehalt der Lösung: ca. 19,4 Gew.-%, Gehalt der Lösung an freiem 1,6-Diisocyanatohexan: unter 0,5 %. Bezogen auf Festharz (Summe der festen Anteile an Polyol und Polyisocyanat) wurden folgende Anteile an Zusatzstoffen verwendet.

| Bestandteile | Gew.-% fest auf fest |
|---|---|
| Dabco 33 LV (PUR-Katalysator von Air Products, 10%ig in Butylacetat | 0,3 |
| BYK 331 (Verlaufsmittel der BYK-Chemie, 50%ig in Butylacetat) | 0,3 |
| Tinuvin 1130 (UV-Absorber der Ciba-Geigy, Basel, 50%ig in Xylol | 2,0 |
| Tinuvin 292 (Lichtschutzmittel der Ciba-Geigy, Basel, 50%ig in Xylol | 1,0 |

Als Lösemittel wurde ein Gemisch aus Methoxypropylacetat, Xylol und n-Butylacetat (1 : 1 : 1) verwendet. Es wurde eingestellt auf einen Gehalt von:

ca. 56 Gew.-% Bindemittel,
ca. 2 Gew.-% Additive,
ca. 42 Gew.-% Lösemittel

Die Auslaufzeit (DIN 53 211, 4-mm-Düse) betrug ca. 20 s. Damit sind die Lacke spritzfertig eingestellt und besitzen nun einen VOC-Wert (volatile organic compounds) von 3,5 lbs/gal.
Die Lacke wurden auf Glasplatten aufgezogen, sowohl bei Raumtemperatur als auch 30 Minuten bei 60 °C getrocknet, wobei die Trocknungsgeschwindigkeit (DIN 53 150) ermittelt wurde und dann 7 Tage bei Raumtemperatur gelagert. Die Trockenfilmdicke betrug ca. 40 bis 50 µm.
Anschließend wurde die Härte nach König (DIN 53 157), der Glanz nach Gardner im 60°-Winkel (DIN 67 530) und die Anlösbarkeit durch Superbenzin (nach 1, 2, 3 und 4 Tagen Lagerung bei Raumtemperatur) geprüft. Die Erichsentiefung wurde an entsprechend beschichteten Prüfblechen ermittelt.
Außerdem wurde die Vergilbungsresistenz bei Bestrahlung mit kurzwelligem UV-Licht im QUV-Test (QUV-Accelerated Weathering Tester, ASTM G 53-77) geprüft. Hierzu wurden auf Aluminiumbleche (68 mm x 150 mm), die zuvor grundiert und mit weißem Basislack beschichtet wurden, Klarlacke auf Basis der Polyole A 1 bis A 8 und V1 bis V3 appliziert. Nach Applikation und Trocknung der Lacke (30 Minuten bei 60 °C), wurden diese 7 Tage bei Raumtemperatur gelagert und anschließend im QUV-Gerät (Fa. Q-Panel Company) geprüft. Dabei wurde im Zyklus jeweils 4 h im intensiven, ungefilterten UV-Licht im Wellenlängenbereich von ca. 280 bis 370 nm (Maximum bei 313 nm) bestrahlt bzw. 4 h im Dunkeln belassen, bei einer Gesamtdauer von 1.000 h. Nach dem Abwaschen der Probe wurde mittels eines Farbmeßgerätes die Gesamtfarbdifferenz DE (gegenüber der nicht bewitterten Platte) als Maß für die aufgetretene Vergilbung bestimmt.
Die Prüfergebnisse von Lacken auf Basis der Copolymerisate A1 bis A8 und V1 bis V3 sind in Tabelle 2 dargestellt.

Tabelle 2: Prüfergebnisse von 2K-PUR-Klarlacken auf Basis der erfindungsgemäßen Polyole A1 bis A8 und der Vergleichspolyole V1 bis V3

| Lack auf Basis von Polyol | A1 | A2 | A3 | A4 | A5 | A6 | A7 | A8 | V1 | V2 | V3 |
|---|---|---|---|---|---|---|---|---|---|---|---|
| Trocknung[1] bei RT | | | | | | | | | | | |
| T1 (Minuten) | 120 | 105 | 75 | 90 | 120 | 90 | 105 | 75 | 150 | 150 | 120 |
| T3 (Stunden) | 7,5 | 7,0 | 6,0 | 6,5 | 7,5 | 6,5 | 7,0 | 6,0 | 9 | 9 | 7,5 |
| Pendeldämpfung | | | | | | | | | | | |
| 23 °C + 7d RT (s) | 120 | 123 | 167 | 135 | 118 | 138 | 126 | 167 | 124 | 90 | 155 |
| 30'60 °C + 7 d RT (s) | 172 | 170 | 196 | 182 | 172 | 185 | 170 | 200 | 174 | 130 | 204 |
| Superbenzinfestigkeit[2] | | | | | | | | | | | |
| 23 °C + 1 d RT, 1 Min./5 Min. | 0/1 | 0/1 | 0/0 | 0/1 | 0/1 | 0/1 | 0/1 | 0/0 | 0-1/2 | 0-1/2 | 2/4 |
| 23 °C + 2 d RT, 1 Min./5 Min. | 0/0 | 0/0 | - | 0/0 | 0/0 | 0/0 | 0/0 | - | 0/1 | 0/1 | 1/2 |
| 23 °C + 3 d RT, 1 Min./5 Min. | - | - | - | - | - | - | - | - | 0/0 | 0/0 | 0/1 |
| 23 °C + 4 d RT, 1 Min./5 Min. | - | - | - | - | - | - | - | - | - | - | 0/0 |
| Erichsentiefung (mm) | 11,0 | 11,0 | 10,5 | 11,0 | 11,0 | 10,5 | 11,0 | 10,5 | 11,0 | 11,0 | 10,5 |
| QUV-Test (DE) 250 h/1.000 h | 4,4/7,3 | 4,6/7,7 | 4,1/6,3 | 4,3/6,8 | 4,3/7,1 | 4,2/6,9 | 3,8/5,9 | 4,3/6,8 | 3,2/6,8 | 4,3/7,0 | 4,0/6,4 |
| Glanz [3] ($\triangleleft$ 60°) O h/1000 h | 100/98 | 100/98 | 98/94 | 99/98 | 100/97 | 99/96 | 100/98 | 97/93 | 97/94 | 98/94 | 96/93 |

[1] T1 Sandtrocknung, T3 Durchtrocknung (DIN 53 150)

[2] 0 = bester Wert (ohne Befund), 5 = schlechtester Wert (Lackfilm an der belasteten Stelle vollständig aufgelöst)

[3] Vor und nach dem QUV-Test

EP 0 778 298 B1

Diskussion der Resultate

2K-PUR-Klarlacke auf Basis der Polyole A1 bis A8 haben trotz des hohen Festkörpergehaltes bei Applikation eine schnelle Trocknung bei Raumtemperatur und sind schon nach 1 bis 2 Tagen beständig gegen die Einwirkung von Superbenzin. Glanz, Elastizität und Filmhärte liegen auf hohem Niveau, vergleichbar mit heutigen Standardsystemen. Dagegen haben die Lacke der Polyole V1 und V2, die unter das Anspruchsbegehren der EP 225 809 fallen und kein Polybutadien enthalten, eine längere Trocknungszeit und eine etwas schlechtere Superbenzinfestigkeit. Der Lackfilm des Polyols V3 hat zwar eine schnelle Trocknung, aber nach einem Tag eine schlechte Superbenzinfestigkeit, die nach 2 und 3 Tagen besser wird und erst nach 4 Tagen in Ordnung ist. Die Prüfergebnisse zeigen somit deutlich, daß festkörperreiche 2K-PUR-Klarlacke auf Basis der erfindungsgemäßen Polyole A1 bis A8 trotz ihres High-Solids-Charakters sowohl eine sehr schnelle Trocknung als auch eine sehr gute Benzinbeständigkeit aufweisen und daß damit lackierte Gebrauchsgegenstände, vorzugsweise Kraftfahrzeuge, schon nach kürzester Zeit ihrer gebrauchsmäßigen Bestimmung zugeführt werden können.

**Patentansprüche**

1. Bindemittelkombination, bestehend aus

   A) 95 bis 40 Gew.-Teilen OH-funktioneller Pfropfcopolymerisatharze, hergestellt durch Copolymerisation von

   a) 0,1 bis 10 Gew.-Teilen mindestens eines gegebenenfalls funktionellen Polybutadiens mit einem Molekulargewicht $\overline{M}n$ von 500 bis 10.000 und mit mindestens 20 % 1,2-Vinylstruktur

   b) 5 bis 30 Gew.-Teilen mindestens eines aliphatischen $\alpha$-Olefins mit 8 bis 16 Kohlenstoffatomen,

   c) 10 bis 70 Gew.-Teilen mindestens eines ungesättigten, aromatischen Monomeren wie Styrol, $\alpha$-Methylstyrol oder Vinyltoluol

   d) 5 bis 60 Gew.-Teilen mindestens eines Hydroxyalkylesters der Acryl- bzw. Methacrylsäure mit 2 bis 4 Kohlenstoffatomen im Hydroxyalkylrest und primär gebundener Hydroxylgruppe,

   e) 0 bis 50 Gew.-Teilen mindestens eines (cyclo)aliphatischen Esters der Acryl- und/oder Methacrylsäure mit 1 bis 12 Kohlenstoffatomen im (Cyclo)alkylrest,

   f) 0,1 bis 10 Gew.-Teilen mindestens einer $\alpha,\beta$-monoolefinisch ungesättigten Mono- oder Dicarbonsäure mit 3 bis 7 Kohlenstoffatomen und/oder mindestens eines Maleinsäure- bzw. Fumarsäurehalbesters mit 1 bis 14 Kohlenstoffatomen im Alkoholrest,

   g) 0 bis 30 Gew.-Teilen weiteren copolymerisierbaren, olefinisch ungesättigten Verbindungen und

   B) 5 bis 60 Gew.-Teilen eines mehrfach funktionellen Vernetzerharzes, wie Aminoplastharze wie alkoxylierte Melaminharze, Melamin-Formaldehyd-Kondensationsprodukte, Harnstoffharze, Guanidinharze, Phenolplastharze, und Resolharze wobei jeweils die Summe der Gew.-Teile der Komponenten A) und B) sowie die Summe der Gew.-Teile der Komponenten a) bis g) 100 beträgt.

2. Bindemittelkombination nach Anspruch 1, dadurch gekennzeichnet, dass das mehrfachfunktionelle Vernetzerharz B), gegebenenfalls blockierte, polyfunktionelle Isocyanate wie oligomere Isocyanate mit Biuret-, Allophanat-, Uretdio-, Urethan und/oder Isocyanatstruktur enthält.

3. Bindemittelkombinationen nach Anspruch 1 und 2, dadurch gekennzeichnet, daß die Pfropfcopolymerisate A) bestehen aus:

   a) 0,3 bis 7,5 Gew.-Teilen eines oder mehrerer, gegebenenfalls funktioneller Polybutadiene mit einem Molekulargewicht $\overline{M}n$ von 500 bis 5000 und mindestens 30 % 1,2-Vinylstruktur,
   b) 5 bis 25 Gew.-Teilen mindestens eines $\alpha$-Olefins mit 8 bis 12 Kohlenstoffatomen,
   c) 15 bis 65 Gew.-Teilen Styrol,
   d) 7,5 bis 55 Gew.-Teilen Hydroxyethylacrylat, Hydroxyethylmethacrylat, Butandiol-1,4-monoacrylat oder deren Mischungen,

e) 0 bis 45 Gew.-Teilen mindestens eines (cyclo)aliphatischen Esters der Acryl- und/oder Methacrylsäure mit 1 bis 10 Kohlenstoffatomen im (Cyclo)alkylrest,

f) 0,3 bis 8 Gew.-Teilen Acrylsäure, Methacrylsäure, Maleinsäureoder Fumarsäurehalbester mit 1 bis 8 Kohlenstoffatomen in der Alkoholkomponente oder deren Mischungen und

g) 1 bis 25 Gew.-Teilen Acrylnitril, Methacrylnitril, Hydroxypropyl(meth)acrylat (bis 10 Gew-%), Vinylester aliphatischer, gegebenenfalls verzweigter Monocarbonsäuren mit 1 bis 10 Kohlenstoffatomen im Säurerest, Di(cyclo)alkylester der Malein- und/oder Fumarsäure mit 1 bis 8 Kohlenstoffatomen im Alkoholrest oder deren Mischungen.

4. Bindemittelkombinationen nach Anspruch 1 und 2, dadurch gekennzeichnet, daß die Pfropfcopolymerisate A) bestehen aus:

a) 0,5 bis 5 Gew.-Teilen eines oder mehrerer, gegebenenfalls funktioneller, Polybutadiene mit einem Molekulargewicht von 500 bis 3.000 und mindestens 40 % 1,2-Vinylstruktur,

b) 5 bis 20 Gew.-Teilen 1-Octen, 1-Decen oder deren Mischungen,

c) 20 bis 65 Gew.-Teilen Styrol,

d) 10 bis 50 Gew.-Teilen Hydroxyethylacrylat, Hydroxyethylmethacrylat oder deren Mischungen,

e) 0 bis 35 Gew.-Teilen Ethylacrylat, Butylacrylat, 2-Ethylhexylacrylat, Isobornylacrylat, Methylmethacrylat, Ethylmethacrylat, Butylmethacrylat, 2-Ethylhexylmethacrylat, Cyclohexylmethacrylat, Isobornylmethacrylat oder deren Mischungen,

f) 0,5 bis 5 Gew.-Teilen Acrylsäure, Methacrylsäure oder deren Mischungen und

g) 3 bis 20 Gew.-Teilen Vinylester aliphatischer, gegebenenfalls verzweigter Monocarbonsäuren mit 3 bis 9 Kohlenstoffatomen im Säurerest, Di(cyclo)alkylester der Malein- oder Fumarsäure mit 1 bis 8 Kohlenstoffatomen im Alkoholrest oder deren Mischungen.

5. Bindemittelkombinationen nach Anspruch 1 und 2, dadurch gekennzeichnet, daß das mehrfach funktionelle Vernetzerharz B) ein Aminoplastharz ist.

6. Bindemittelkombinationen nach Anspruch 1 und 2, dadurch gekennzeichnet, daß das mehrfach funktionelle Vernetzerharz B) ein Phenolharz, ein Resolharz oder eine Mischung daraus ist.

7. Bindemittelkombinationen nach Anspruch 1 und 2, dadurch gekennzeichnet, daß das mehrfach funktionelle Vernetzerharz B) ein Polyisocyanat ist.

8. Verwendung von Bindemittelkombinationen nach Anspruch 1 und 2 zur Beschichtung von Oberflächen.

**Claims**

1. A binder combination consisting of:

A) 95 to 40 parts by weight of OH-functional graft-copolymer resins, prepared by copolymerisation of

a) 0.1 to 10 parts by weight of at least one optionally functional polybutadiene with a molecular weight $\overline{M}_n$ from 500 to 10,000 and with at least 20 % 1,2-vinyl structure,

b) 5 to 30 parts by weight of at least one aliphatic $\alpha$-olefin with 8 to 16 carbon atoms,

c) 10 to 70 parts by weight of at least one unsaturated aromatic monomer such as styrene, $\alpha$-methylstyrene or vinyltoluene,

d) 5 to 60 parts by weight of at least one hydroxyalkyl ester of acrylic or methacrylic acid with 2 to 4 carbon atoms in the hydroxyalkyl radical and primary bonded hydroxyl group,

e) 0 to 50 parts by weight of at least one (cyclo)aliphatic ester of acrylic and/or methacrylic acid with 1 to 12 carbon atoms in the (cyclo)alkyl radical,

f) 0.1 to 10 parts by weight of at least one $\alpha$, $\beta$-mono-olefinically unsaturated monocarboxylic or dicarboxylic acid with 3 to 7 carbon atoms and at least one semi-ester of maleic acid or fumaric acid with 1 to 14 carbon atoms in the alcohol radical,

g) 0 to 30 parts by weight of other copolymerisable olefinically unsaturated compounds and

B) 5 to 60 parts by weight of a multifunctional cross-linking resin, e.g. aminoplastic resins such as alkoxylated melamine resins, melamine-formaldehyde condensation products, urea resins, guanidine resins, phenoplastic resins and resol resins, the sum of the parts by weight of components A) and B) and the sum of the parts by weight of components a) to g) each amounting to 100.

2. Binder combination according to Claim 1, characterised in that the multifunctional cross-linking resin B) contains optionally blocked, polyfunctional isocyanates such as oligomeric isocyanates with biuret, allophanate, uretdione, urethane and/or isocyanate structure.

3. Binder combinations according to Claims 1 and 2, characterised in that the graft copolymers A) consist of:

a) 0.3 to 7.5 parts by weight of one or more optionally functional polybutadienes with a molecular weight $\overline{M}n$ from 500 to 5,000 and at least 30 % 1,2-vinyl structure,

b) 5 to 25 parts by weight of at least one $\alpha$-olefin with 8 to 12 carbon atoms,

c) 15 to 65 parts by weight of styrene,

d) 7.5 to 55 parts by weight of hydroxyethyl acrylate, hydroxyethyl methacrylate, 1,4-butanediol monoacrylate or mixtures thereof,

e) 0 to 45 parts by weight of at least one (cyclo)aliphatic ester of acrylic and/or methacrylic acid with 1 to 10 carbon atoms in the (cyclo)alkyl radical,

f) 0.3 to 8 parts by weight of acrylic acid, methacrylic acid, semi-ester of maleic acid or fumaric acid with 1 to 8 carbon atoms in the alcohol component or mixtures thereof and

g) 1 to 25 parts by weight of acrylonitrile, methacrylonitrile, hydroxypropyl (meth)acrylate (up to 10 % by weight), vinyl esters of aliphatic, optionally branched monocarboxylic acids with 1 to 10 carbon atoms in the acid radical, di(cyclo)alkyl esters of maleic and/or fumaric acid with 1 to 8 carbon atoms in the alcohol radical or mixtures thereof.

4. Binder combinations according to Claims 1 and 2, characterised in that the graft copolymers A) consist of:

a) 0.5 to 5 parts by weight of one or more optionally functional polybutadienes with a molecular weight from 500 to 3,000 and at least 40 % 1,2-vinyl structure,

b) 5 to 20 parts by weight of 1-octene, 1-decene or mixtures thereof,

c) 20 to 65 parts by weight of styrene,

d) 10 to 50 parts by weight of hydroxyethyl acrylate, hydroxyethyl methacrylate or mixtures thereof,

e) 0 to 35 parts by weight of ethyl acrylate, butyl acrylate, 2-ethylhexyl acrylate, isobornyl acrylate, methyl methacrylate, ethyl methacrylate, butyl methacrylate, 2-ethylhexyl methacrylate, cyclohexyl methacrylate, isobornyl methacrylate or mixtures thereof,

f) 0.5 to 5 parts by weight of acrylic acid, methacrylic acid or mixtures thereof and

g) 3 to 20 parts by weight of vinyl esters of aliphatic, optionally branched monocarboxylic acids with 3 to 9 carbon atoms in the acid radical, di(cyclo)alkyl esters of maleic or fumaric acid with 1 to 8 carbon atoms in the alcohol radical or mixtures thereof.

**5.** Binder combinations according to Claims 1 and 2, characterised in that the multifunctional cross-linking resin B) is an aminoplastic resin.

**6.** Binder combinations according to Claims 1 and 2, characterised in that the multifunctional cross-linking resin B) is a phenolic resin, a resol resin or a mixture thereof.

**7.** Binder combinations according to Claims 1 and 2, characterised in that the multifunctional cross-linking resin B) is a polyisocyanate.

**8.** Use of binder combinations according to Claims 1 and 2 for the coating of surfaces.

**Revendications**

**1.** Liant combiné consistant en

A) 95 à 40 parties en poids de résines copolymères greffées à fonctions OH, préparées par copolymérisation de

a) 0,1 à 10 parties en poids d'au moins un polybutadiène éventuellement fonctionnel à un poids moléculaire $\overline{M}n$ de 500 à 10 000 et à au moins 20 % de structure 1,2-vinylique,
b) 5 à 30 parties en poids d'au moins une $\alpha$-oléfine en $C_8$-$C_{16}$,
c) 10 à 70 parties en poids d'au moins un monomère aromatique insaturé tel que le styrène, l'$\alpha$-méthyls-tyrène ou le vinyltoluène,
d) 5 à 70 parties en poids d'au moins un esterhydroxyalkylique de l'acide acrylique ou méthacrylique contenant 2 à 4 atomes de carbone dans le groupe hydroxyalkyle et à groupe hydroxy primaire,
e) 0 à 50 parties en poids d'au moins un ester (cyclo)aliphatique de l'acide acrylique et/ou méthacrylique contenant 1 à 12 atomes de carbone dans le groupe (cyclo)alkyle,
f) 0,1 à 10 parties en poids d'au moins un acide mono- ou di-carboxylique à insaturation $\alpha,\beta$-monooléfi-nique en $C_3$-$C_7$ et/ou au moins un hémi-ester maléique ou fumarique contenant 1 à 14 atomes de carbone dans le radical alcoolique,
g) 0 à 30 parties en poids d'autres composés à insaturation oléfinique copolymérisables et

B) 5 à 60 parties en poids d'une résine réticulante polyfonctionnelle, par exemple une résine aminoplaste telle qu'une résine de mélamine alcoxylée, un produit de condensation mélamine-formaldéhyde, une résine d'urée, une résine de guanidine, une résine phénoplaste et une résine de résole, la somme des parties en poids des composants A) et B) et la somme des parties en poids des composants a) à g) étant égales à 100.

**2.** Liant combiné selon la revendication 1, caractérisé en ce que la résine réticulante polyfonctionnelle B) contient des isocyanates polyfonctionnels éventuellement bloqués tels que des isocyanates oligomères à structure de biuret, d'allophanate, d'uret-dione, d'uréthane et/ou d'isocyanate.

**3.** Liant combiné selon les revendications 1 et 2, caractérisé en ce que les copolymères greffés A) consistent en :

a) 0,3 à 7,5 parties en poids d'un ou plusieurs polybutadiènes éventuellement fonctionnels à un poids molé-culaire $\overline{M}n$ de 500 à 5 000 et au moins 30 % de structure 1,2-vinylique,
b) 5 à 25 parties en poids d'au moins une $\alpha$-oléfine en $C_8$-$C_{12}$,
c) 15 à 65 parties en poids de styrène,
d) 7,5 à 55 parties en poids d'acrylate d'hydroxyéthyle, de méthacrylate d'hydroxyéthyle, de monoacrylate du 1,4-butanediol ou leurs mélanges,
e) 0 à 45 parties en poids d'au moins un ester (cyclo)aliphatique de l'acide acrylique et/ou méthacrylique contenant 1 à 10 atomes de carbone dans le groupe (cyclo)alkyle,
f) 0,3 à 8 parties en poids d'acide acrylique, d'acide méthacrylique, d'hémi-esters maléiques ou fumariques contenant 1 à 8 atomes de carbone dans le composant alcoolique, ou leurs mélanges et

g) 1 à 25 parties en poids d'acrylonitrile, de méthacrylonitrile, de (méth)-acrylate d'hydroxypropyle (jusqu'à 10 % en poids), d'esters vinyliques, d'acides monocarboxyliques aliphatiques éventuellement ramifiés contenant 1 à 10 atomes de carbone dans le radical acide, d'esters di(cyclo)alkyliques de l'acide maléique et/ou fumarique contenant 1 à 8 atomes de carbone dans le radical alcoolique, ou leurs mélanges.

4. Liant combiné selon les revendications 1 et 2, caractérisé en ce que les copolymères greffés A) consistent en :

a) 0,5 à 5 parties en poids d'un ou plusieurs polybutadiènes éventuellement fonctionnels à un poids moléculaire de 500 à 3 000 et à au moins 40 % de structure 1,2-vinylique,
b) 5 à 20 parties en poids de 1-octène, de 1-décène ou leurs mélanges,
c) 20 à 65 parties en poids de styrène,
d) 10 à 50 parties en poids d'acrylate d'hydroxyéthyle, de méthacrylate d'hydroxyéthyle ou leurs mélanges,
e) 0 à 35 parties en poids d'acrylate d'éthyle, d'acrylate de butyle, d'acrylate de 2-éthylhexyle, d'acrylate d'isobornyle, de méthacrylate de méthyle, de méthacrylate d'éthyle, de méthacrylate de butyle, de méthacrylate de 2-éthylhexyle, de méthacrylate de cyclohexyle, de méthacrylate d'isobornyle ou leurs mélanges,
f) 0,5 à 5 parties en poids d'acide acrylique, d'acide méthacrylique ou leurs mélanges et
g) 3 à 20 parties en poids d'esters vinyliques d'acides monocarboxyliques aliphatiques éventuellement ramifiés contenant 3 à 9 atomes de carbone dans le radical acide, d'esters di(cyclo)alkyliques de l'acide maléique ou fumarique contenant 1 à 8 atomes de carbone dans le radical alcoolique ou leurs mélanges.

5. Liant combiné selon les revendications 1 et 2, caractérisé en ce que la résine réticulante polyfonctionnelle B) est une résine aminoplaste.

6. Liant combiné selon les revendications 1 et 2, caractérisé en ce que la résine réticulante polyfonctionnelle B) est une résine phénolique, une résine de résole ou un mélange de telle résine.

7. Liant combiné selon les revendications 1 et 2, caractérisé en ce que la résine réticulante polyfonctionnelle B) est un polyisocyanate.

8. Utilisation de liants combinés selon les revendications 1 et 2, pour le revêtement de surfaces.